(19) **Europäisches Patentamt**
**European Patent Office**
**Office européen des brevets**

(11) **EP 3 178 264 B1**

(12) **EUROPEAN PATENT SPECIFICATION**

(45) Date of publication and mention of the grant of the patent:
**29.09.2021  Bulletin 2021/39**

(51) Int Cl.:
*H04W 52/10* *(2009.01)*    *H04W 52/38* *(2009.01)*
*H04W 52/58* *(2009.01)*    *H04W 52/14* *(2009.01)*
*H04W 52/24* *(2009.01)*    *H04W 52/36* *(2009.01)*
*H04W 4/70* *(2018.01)*

(21) Application number: **14899440.3**

(22) Date of filing: **07.08.2014**

(86) International application number:
**PCT/CN2014/083886**

(87) International publication number:
**WO 2016/019545 (11.02.2016 Gazette 2016/06)**

(54) **POWER CONTROL METHOD AND USER EQUIPMENT IN DEVICE TO DEVICE COMMUNICATION IN SERVING CELL**

LEISTUNGSSTEUERUNGSVERFAHREN UND BENUTZERGERÄT IN DER VORRICHTUNG-ZU-VORRICHTUNG-KOMMUNIKATION IN EINER VERSORGENDEN ZELLE

PROCÉDÉ DE COMMANDE DE PUISSANCE ET ÉQUIPEMENT UTILISATEUR DANS UNE COMMUNICATION DE DISPOSITIF À DISPOSITIF (D2D) DANS UNE CELLULE DE DESSERTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2017  Bulletin 2017/24**

(73) Proprietor: **Sun Patent Trust**
**New York, NY 10017 (US)**

(72) Inventors:
• **WANG, Lilei**
  **Beijing 100020 (CN)**
• **SUZUKI, Hidetoshi**
  **Osaka-shi**
  **Osaka 540-6207 (JP)**
• **FENG, Sujuan**
  **63225 Langen (DE)**
• **HOSHINO, Masayuki**
  **Osaka-shi**
  **Osaka 540-6207 (JP)**
• **LOEHR, Joachim**
  **63225 Langen (DE)**

(74) Representative: **Grünecker Patent- und Rechtsanwälte**
**PartG mbB**
**Leopoldstraße 4**
**80802 München (DE)**

(56) References cited:
  **CN-A- 103 139 889**      **US-A1- 2009 325 625**
  **US-A1- 2011 275 382**    **US-A1- 2011 275 382**

• **NSN ET AL: "WAN protection by configurable D2D transmission power control", 3GPP DRAFT; R1-142454, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050789572, Retrieved from the Internet: URL:http://www.3gpp.org/ftp/Meetings_3GPP_ SYNC/RAN1/RAN1/Docs/ [retrieved on 2014-05-18]**
• **None**

EP 3 178 264 B1

**EP 3 178 264 B1**

**Description**

TECHNICAL FIELD

The present disclosure relates to the field of wireless communication, and particularly, to a power control method and user equipment in device to device (D2D) communication in a serving cell.

BACKGROUND

The D2D is direct communication between devices, and such kind of communication could happen within network coverage and without network coverage.

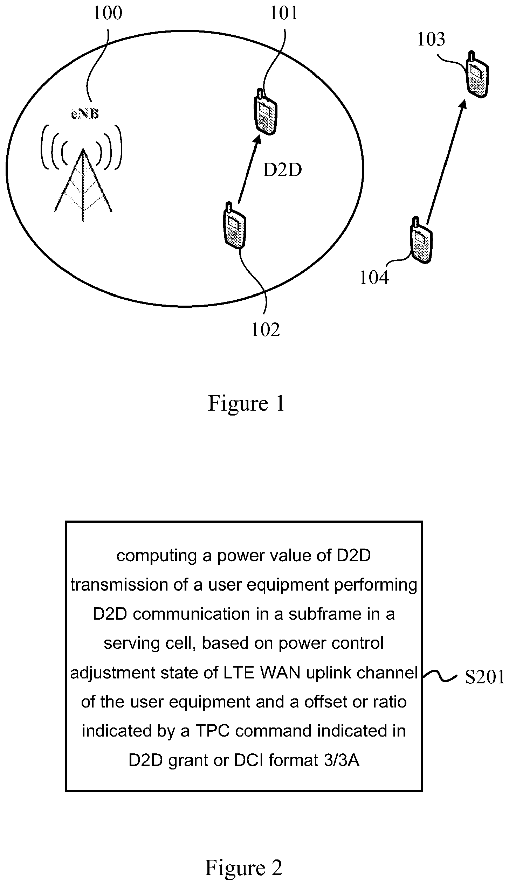

Fig.1 shows a situation in which a D2D direct communication within network coverage and a D2D direct communication without network coverage.

As shown in Fig.1, user equipments 101 and 102 directly communicate within network coverage of eNB 100, while user equipments 103 and 104 directly communicate without network coverage of the eNB 100.

When D2D user equipments are in LTE Wide Area Network (WAN), they may be operated with LTE WAN and D2D simultaneously. That means, in some radio resources/subframes, D2D user equipments transmit/receive LTE WAN signals, but in other radio resources/subframes, D2D user equipments transmit/receive D2D signals. This also depends on which mode D2D user equipments are operated. Currently there are two modes that user equipment could be operated: in Mode 1, eNB (like base station) or release-10 relay node schedules the exact resources used by a user equipment to transmit direct data and direct control information; in Mode 2, a user equipment on its own selects resources from resource pools to transmit direct data and direct control information.

In mode 1, the resources of D2D are allocated or fully controlled by eNB, but in mode 2, user equipment itself selects the resources for D2D transmission. Generally, in mode 1, D2D user equipments (for example in RRC_CONNECTED) could receive dedicated RRC signaling from eNB, but in mode 2, D2D user equipments (for example in RRC_IDLE) can only receive common RRC signaling, for example SIB (system information block). In this document, the focus is mainly user equipments in mode 1. When D2D resources and LTE WAN resources are multiplexed in the same subframe, there are problems of in-band emission and inter-carrier interference. The 1st problem means that D2D signal may cause power leakage to neighbor LTE WAN signals in the frequency domain in the same subframe. The 2nd problem somehow has similar meaning with the 1st problem but it may be caused by other reasons, for example whether the timing of signals are aligned. If D2D signal uses extended CP (cyclic prefix) but LTE WAN signal uses normal CP (NCP), which means the timing of two type of signals are not aligned, it may lead to inter-carrier interference.

**Document** US 2011/275382 A1 relates to quality indicators. From each of at least two other devices with which a first device has a wireless device-to-device link, a quality indicator for a link observed by the respective other device is received by the first device. The first device compiles the received quality indicators, possibly including an additional quality indicator of each of the links observed by the first device, into a compressed report and sends it to a network entity. The quality indicator is for a device-to-device link and is determined by the respective other device from listening to a sounding reference signal sent by its pair device to the network entity. The setting of D2D power offset is done by the higher layer signaling initial setup and event-based control, including the fast power control is done by a new D2D transmission power control (TPC) command sent in a new D2D DCI format on the PDCCH during normal D2D operation. The eNB computes the D2D transmission power offset for UL D2D transmission power control to allow maximum D2D transmission power without creating interference to UL cellular transmissions. There is a new DCI format to indicate the D2D transmission power offset by PDCCH.

The article by NSN, Nokia: "WAN protection by configurable D2D transmission power control", 3GPP Draft, R1-142454, 3GPP TSG-RAN WG1 Meeting #77, Seoul, Korea,18 May 2014 is a contribution to a 3GPP standardization meeting and relates to device-to-device (D2D) communication, and in particular to D2D transmission power control.

SUMMARY OF THE DISCLOSURE

The present disclosure is made in view of the above consideration.

This is achieved by the features of the independent claims.

BRIEF DESCRIPTION OF THE DRAWINGS

The foregoing and other features of the present disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings, in which:

Fig.1 shows a situation in which a D2D direct communication within network coverage and a D2D direct communication without network coverage;
Fig. 2 shows a flow chart of a power control method according to an embodiment not covered by the claims;
Fig.3 shows an example of subframes of the user equipment according to an embodiment of the present disclosure;
Fig.4 shows an example of multiple D2D groups in the same serving cell according to an embodiment of the present disclosure; and
Fig.5 shows a block diagram of the user equipment according to an embodiment of the present disclosure.

DETAILED DESCRIPTION

In the following detailed description, reference is made to the accompanying drawings, which form a part thereof. In the drawings, similar symbols typically identify similar components, unless context dictates otherwise. It will be readily understood that the aspects of the present disclosure can be arranged, substituted, combined, and designed in a wide variety of different configurations, all of which are explicitly contemplated and make part of this disclosure.

Power control was approved already by many companies in 3GPP as a good/valid solution to solve above two problems compared with other solutions. For example, the other solutions may be as follows. A guard band is used to solve the in-band emission issue, but resources are wasted; aligned timing (the same CP or timing advance) between D2D and LTE WAN is used, but the issue is that it may not solve the in-band emission. Or LTE WAN resources are not allocated in D2D subframes to avoid the above problems, but it may give big impact to WAN PUCCH timing specification or LTE WAN resource utilization. So from this point of view, the power control is a very promising/necessary solution in the D2D transmission. But of course, the power control could also combine any of the above three solutions.

On the other hand, however, the problem about the D2D power control is that many details are not concluded yet, for example following issues: how to control the D2D power to reduce interference to LTE WAN resources, how to accumulate power for D2D and LTE WAN signals/subframes, how to configure power control parameters for different D2D user equipments, what is the TPC command range.

One straightforward solution is D2D and LTE WAN adopt totally independent power control mechanism (including open-loop components like $P_0$ and alpha (a) and closed-loop components like fc()). The merit of such solution is that eNB could adjust D2D power flexibly without caring about LTE WAN interference, and it is friendly to the D2D coverage. But the problem of this solution is: (1) eNB can not accurately control D2D power to reduce interference to LTE WAN due to inaccurate knowledge of transmission power of LTE WAN (eNB does not know fc()) and D2D (No D2D PHR and RSRP so far); (2) Increased user equipment complexity due to dual independent power accumulation functions.

Another straightforward solution is open-loop power control parameters like $P_0$ and alpha of D2D are independently configured between D2D and LTE WAN, but accumulation function is shared between D2D and LTE WAN. That means that subframe i's power (LTE WAN subframe) will be accumulated to subframe i+1's power (D2D subframe) for the same user equipment or vice versa. The merit of such solution is that it only considers one accumulation function. But the problem of this solution is: (1) LTE WAN power/performance is impacted by D2D power (mutual impact); (2) it may lead to very dynamic WAN signal power change in eNB reception, and instable receiving performance resulting that automatic gain control (AGC) in radio frequency (RF) part can not work well.

Fig. 2 shows a flow chart of a power control method according to an embodiment not covered by the claims.

As shown in Fig.2, the power control method according to the embodiment comprising step S201. In the step S201, a power value of device to device (D2D) transmission of a user equipment performing D2D communication in a subframe in a serving cell is computed, based on power control adjustment state of LTE wide area network (WAN) uplink channel of the user equipment and a offset or ratio indicated by a TPC command indicated in D2D grant or DCI format 3/3A.

According to an embodiment of the present disclosure, in the above power control method, the uplink channel is any of PUSCH, SRS, PUCCH or combination of them.

According to an embodiment of the present disclosure, in the above power control method, the power value is further decided by open-loop parameters include $P_0$ and alpha ($\alpha$) of D2D configured by MAC layer signaling or RRC signaling.

Specifically, if the uplink channel is PUSCH, the power value may be calculated by the following formula (1):

$$10\log_{10}(M_{D2D,c}(i)) + P_{D2D,c}(j) + \alpha_{D2D,c}(j) \cdot PL_c + \Delta_{TF,c}(i) + f_c(i-1) + \delta_{D2D,c}(i-K_{D2D})$$

$$\dots \dots (1)$$

Here, the parameter $M_{D2D,c}(i)$ is the bandwidth of the D2D resource assignment expressed in number of resource blocks valid for the subframe i and the serving cell "c". The parameter $P_{D2D,c}(j)$ is a parameter which means a targeted received power of an eNB of the serving cell "c". The "j" means different grant types, for example, in PUSCH transmissions, in case of a semi-persistent grant, then j=0, in case of a dynamic scheduled grant, then j=1, and in case of random access response grant, then j=2. according to another embodiment, the $P_{D2D,c}()$ may also be fixed in specification instead of multiple values.

The parameter $PL_c$ is the downlink pathloss estimate (between the eNB and D2D user equipment) calculated in the user equipment for the serving cell "c" in dB, and $PL_c$ = referenceSignalPower - higher layer filtered RSRP. Here, "referenceSignalPower" may be provided by high-layer signaling. The parameter $\alpha_{D2D,c}(j)$ is a compensation coefficient of the downlink pathloss $PL_c$. According to another embodiment of the present disclosure, in the above power control method, for j=0 or 1, $\alpha_c(j) \in \{0, 0.4, 0.5, 0.6, 0.7, 0.8, 0.9, 1\}$ is a 3-bit parameter provided by higher layer signaling for the serving cell "c", and for j=2, $\alpha_c(j) = 1$.

The parameter $\Delta_{TF,c}(i)$ is a minor offset similar with that of the current PUSCH power control formula.

The power control adjustment state of LTE WAN uplink channel of the user equipment in latest LTE WAN subframe is $f_c(i-1)$. That could be accumulated/absolute power value of a uplink subframe immediate before the subframe i, of the same user equipment in the LTE WAN. And such value is adjusted by a TPC command indicated by LTE WAN subframe grant, for example DCI format 0/4 or DCI format 3/3A, used for PUSCH power adjustment.

In the present embodiment, the offset or ratio indicated by the TPC command may be the parameter $\delta_{D2D,c}(i-K_{D2D})$, which is a correction value used for the D2D communication, and included in the D2D grant or indicated in DCI format 3/3A, in which there are two options: option (1), the D2D TPC command and the LTE WAN TPC command are located in the same DCI format 3/3A; option (2), Only the D2D TPC commands are in DCI format 3/3A.

In the present embodiment, the offset and/or ratio indicate only zero or negative value. For example, when $\delta_{D2D,c}(i-K_{D2D})$ indicates the offset, the value range of $\delta_{D2D,c}(i-K_{D2D})$ is {0, -10}dB, and when $\delta_{D2D,c}(i-K_{D2D})$ indicates the ratio, the value range of $\delta_{D2D,c}(i-K_{D2D})$ is {0, -0.1}. In this case, the length of such field is 1 bit. In case the length of such field is 2 bits, the range could further extended, for example {0, -5, -10, -15}dB.

Further, when $\delta_{D2D,c}(i-K_{D2D})$ indicates the ratio, the formula (2) is used for computing the power control value of the user equipment in D2D communication:

$$10\log_{10}(M_{D2D,c}(i)) + P_{D2D,c}(j) + \alpha_{D2D,c}(j) \cdot PL_c + \Delta_{TF,c}(i) + f_c(i-1) + \delta_{D2D,c}(i-K_{D2D})f_c(i-1)$$

$$\ldots \ldots (2)$$

Compared with the formula (1) in the above embodiment, the only difference of the formula (2) is that a ratio to PUSCH accumulation/absolute power "fc(i-1)" is used. And such ratio is also indicated in the D2D grant or the DCI format 3/3A. Here, since the TPC command range for such ratio could be for example {0, -0.1}, only reduction to the PUSCH power is considered here for the D2D power.

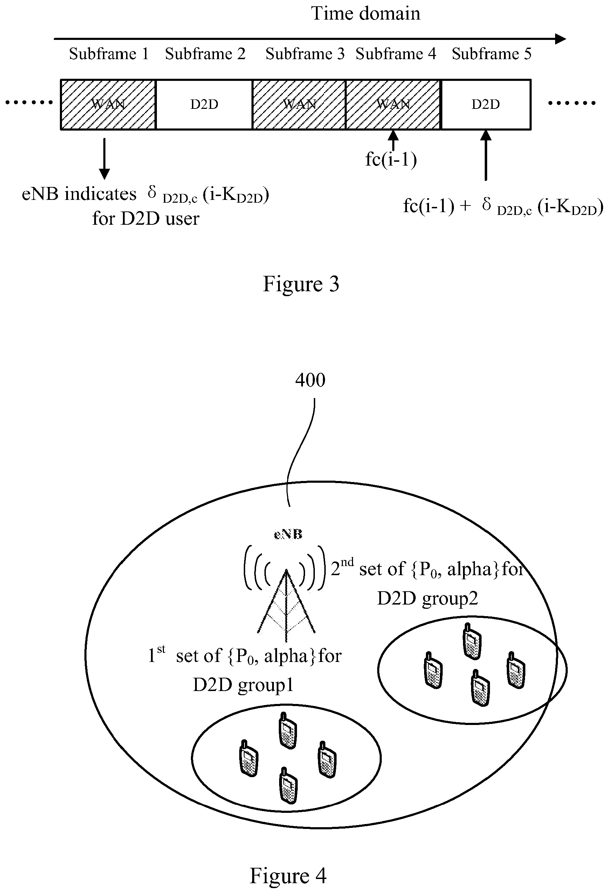

Fig.3 shows an example of subframes of the same user equipment used for D2D and LTE WAN according to an embodiment of the present disclosure.

As shown in Fig.3, there are illustrated 5 subframes in time domain direction used for the same user equipment, that is, subframe 1, subframe 2, subframe 3, subframe 4, and subframe 5, and assuming that subframes 2 and 5 are used for the D2D communication of the user equipment, and subframes 1, 3 and 4 are used for the LTE WAN communication of the same user equipment. For example, it is here assumed "i"=5, that is, the user equipment needs to calculate the D2D power control for subframe 5, so the user equipment will copy the adjustment state "fc(i-1)" of the PUSCH channel in the WAN subframe 4 for the D2D subframe 5, and add the $(\delta_{D2D,c}(i-K_{D2D}))$ indicated in the subframe 1 by the eNB for the final adjustment state of D2D based on the formula (1). Here, the $K_{D2D}$ is 4. The open-loop parameters like $P_{D2D,c}(j)$ and $\alpha_{D2D,c}(j)$ are indicated via SIB.

From this example, it can be seen that the D2D user equipment does not need accumulation power specially for D2D subframes. Instead, it just copies fc(i-1) of the PUSCH and adds dynamic adjustment value $(\delta_{D2D,c}(i-K_{D2D}))$ indicated in the TPC command in the D2D grant or DCI format 3/3A. Regarding the TPC command range indicated in the D2D grant or DCI format 3/3A, it could be only zero/negative value, for example {0, -10dB}.

The benefits of the above embodiment are: the eNB could relatively accurately control the D2D power to LTE WAN interference as it mimics the power of PUSCH for the D2D communication; it does not need independent power accumulation specially for the D2D; the LTE WAN power accumulation is not impacted by the D2D communication; the received power in the eNB side is relatively stable (friendly to AGC).

According to another embodiment not covered by the claims, when the uplink channel is PUCCH or SRS, the PUCCH or SRS's power value is considered as the reference for the D2D power control. In this case, for example, the formula (3) is used for computing the power value of the D2D user equipment:

$$10\log_{10}(M_{D2D,c}(i)) + P_{D2D,c}(j) + \alpha_{D2D,c}(j) \cdot PL_c + \Delta_{TF,c}(i) + 0.5(f_c(i-1) + g(i-1)) + \delta_{D2D,c}(i - K_{D2D})$$

$$\dots \dots (3)$$

Here, the parameter "g(i-1)" is latest PUCCH power control adjustment state.

According to another embodiment of the present disclosure, in the above power control method, the DCI format 3/3A could combine TPC command of LTE WAN and TPC command of D2D or just consist of the TPC commands of D2D.

Fig.4 shows an example of multiple D2D groups in the same serving cell according to an embodiment of the present disclosure.

As shown in Fig.4, for example, there are multiple D2D groups (only two groups are shown herein, but it is not limited to two groups) in the same cell. Then the eNB will indicate several sets of power control parameters via SIB, for example, the 1st set of {$P_0$, alpha} is indicated for the D2D group 1, and the 2nd set of {$P_0$, alpha} is indicated for the D2D group 2. That is, According to an embodiment of the present disclosure, in the above power control method, the $P_0$ and alpha are configured differently among D2D user equipment groups in the same cell via SIB.

According to another embodiment of the present disclosure, different power control parameters, such as$P_0$ and alpha of D2D, are differentiated based on resource allocation mode of D2D or RRC status. For example, $P_0$ and alpha of D2D are configured separately for mode 1 and mode 2 from D2D resource allocation point of view. Or for example, $P_0$ and alpha of D2D are configured separately for user equipments with RRC_CONNECTED and user equipments with RRC_IDLE. Furthermore, for user equipment in RRC_CONNECTED status, $P_0$ and alpha of D2D are configured by dedicated RRC signaling.

According to an embodiment of the present disclosure, in the above power control method, when the uplink channel is PUSCH, the $P_{D2D,c}(j)$ may be configured differently from $P_{O\_PUSCH,c}(j)$, and the $\alpha_{D2D,c}(j)$ may be configured differently from $\alpha_c(j)$, in the power control of uplink channel of the same user equipment in the LTE wide area network, and they are signaled by RRC or MAC signaling.

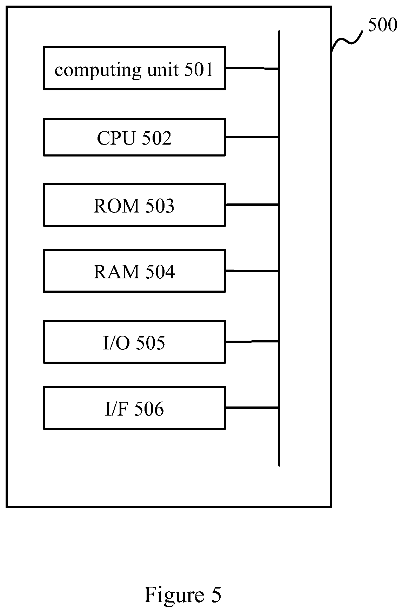

Fig.5 shows a block diagram of the user equipment according to an embodiment of the present disclosure.

As shown in Fig.5, the user equipment 500 used in the device to device (D2D) communication according to an embodiment of the present disclosure comprises a computing unit 501. The computing unit 501 is configured to compute a power value of device to device (D2D) transmission of a user equipment performing D2D communication in a subframe in a serving cell, based on power control adjustment state of LTE wide area network (WAN) uplink channel of the user equipment and a offset or ratio indicated by a TPC command indicated in D2D grant or DCI format 3/3A.

According to another embodiment of the present disclosure, in the user equipment 500, the uplink channel is any of PUSCH, SRS, PUCCH or combination of them.

According to another embodiment of the present disclosure, in the user equipment 500, the power value is further decided by open-loop parameters include $P_0$ and alpha of D2D configured by MAC layer signaling or RRC signaling.

According to another embodiment of the present disclosure, in the user equipment 500, the offset and ratio indicate only zero or negative value.

According to another embodiment of the present disclosure, in the user equipment 500, the DCI format 3/3A could combine TPC command of LTE WAN and TPC command of D2D or just consist of the TPC commands of D2D.

According to another embodiment of the present disclosure, in the user equipment 500, the $P_0$ and alpha of D2D are configured separately for user equipment with RRC_CONNECTED status and user equipment with RRC_IDLE status.

According to another embodiment of the present disclosure, in the user equipment 500, the $P_0$ and alpha of D2D are configured separately based on resource allocation mode which could be mode 1 in which the eNB or rel-10 relay node schedules the exact resources used by the user equipment or mode 2 in which the user equipment on its own selects resources from resource pools.

According to another embodiment of the present disclosure, in the user equipment 500, for user equipment with RRC_CONNECTED status, the $P_0$ and alpha of D2D are configured by dedicated RRC signaling.

According to another embodiment of the present disclosure, in the user equipment 500, $P_0$ and alpha are configured differently among D2D user equipment groups in the same cell via SIB.

According to an illustrative embodiment of the present disclosure, the user equipment 500 may further comprise a central processing unit (CPU) 502 for executing related programs to process various data and control the operations of respective means (units) in the user equipment 500; a read-only memory (ROM) 503 for storing various programs required by CPU to perform various processing and controls; a random access memory (RAM) 504 for storing intermediate data temporarily generated by CPU in the processing and control procedure; an input/output (I/O) means 505 for connecting to the outside devices to transmit various data between an outside device and the user equipment 500 according to an exemplary embodiment of the present invention; and

a user interface (I/F) means 506 which comprises a keyboard, a mouse, a touch pad, and other means implemented by various devices that may interact with the user. These devices or means may be coupled to the computing unit 501 and so on in the user equipment 500 via a bus to perform various control and related operations to realize various corresponding functions of the present invention.

According to another illustrative embodiment of the present invention, the functions of the computing unit 501 may be realized by storing a program in the ROM 503 and executing the program in the CPU 502. According to an embodiment of the present invention, respective devices (units) in the user equipment 500 may be implemented by combining into one unit. Their specific implementation does limit the scope of the present invention.

Based on the above description, the present disclosure proposes to mimic LTE WAN's power of the same user equipment for D2D transmission in order to make the LTE WAN interference controllable, for example, PUSCH adjustment state (e.g, fc()) is used as reference for D2D accumulation power. In this case, there is no need for special accumulation implementation for D2D user equipment within D2D subframes. The open-loop parameters like alpha and $P_0$ of D2D could be set the same as those in LTE WAN. Offset or ratio to PUSCH adjustment state (for example fc()), which would be indicated in TPC command in D2D grant or DCI format 3/3A, is used to further adjust the D2D power to LTE WAN interference. In variant solutions, any other LTE WAN channel's power or combination of them of the same user equipment could be referred for the D2D power. And in the proposals, open-loop parameters like $P_0$ and alpha of D2D could be configured differently between mode 1 and mode 2, or between RRC_IDLE and RRC_CONNECTED statuses. And open-loop parameters like $P_0$ and alpha used by D2D could be indicated by dedicated RRC parameters. And SIB could indicate several sets of open-loop parameters to support multiple groups of D2D in the same cell, for example, 1st set of {P0, alpha} is used for D2D group 1, 2nd set of {P0, alpha} is used for D2D group 2.

The present invention can be realized by software, hardware, or software in cooperation with hardware. Each functional block used in the description of each embodiment described above can be realized by an LSI as an integrated circuit. They may be individually formed as chips, or one chip may be formed so as to include a part or all of the functional blocks. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit or a general-purpose processor. In addition, a FPGA (Field Programmable Gate Array) that can be programmed after the manufacture of the LSI or a reconfigurable processor in which the connections and the settings of circuits cells disposed inside the LSI can be reconfigured may be used. Further, the calculation of each functional block can be performed by using calculating means, for example, including a DSP or a CPU, and the processing step of each function may be recorded on a recording medium as a program for execution. Furthermore, when a technology for implementing an integrated circuit that substitutes the LSI appears in accordance with the advancement of the semiconductor technology or other derivative technologies, it is apparent that the functional block may be integrated by using such technologies.

## Claims

1.  A power control method, comprising:

    computing a power value of device to device, D2D, transmission of a user equipment (102, 104, 500) performing D2D communication in an i-th subframe in a serving cell; and
    transmitting a data signal at the computed power value to another user equipment (101, 103),
    **characterized in that**
    the power value of D2D transmission is computed using a Transmit Power Command, TPC, command transmitted by a D2D grant by copying a power control adjustment state $f_c(i - 1)$ of a PUSCH uplink channel in a wide area network, WAN, (i-1)-th subframe previous to the i-th subframe, and using one of a first set of parameters for D2D transmission mode 1 and a second set of parameters for D2D transmission mode 2, wherein the D2D transmission mode 1 is a transmission mode where a scheduling of the D2D communication is performed by a base station, and the D2D transmission mode 2 is another transmission mode where a scheduling of the D2D communication is performed by the user equipment; and
    the first set of parameters and the second set of parameters are configured independently.

2.  The power control method as recited in claim 1, wherein each of the first set of parameters and the second set of parameters includes $P_0$ and alpha of D2D configured by MAC layer signaling or RRC signaling, wherein $P_0$ is a parameter indicating a targeted receiving power and alpha is a compensation coefficient of a downlink pathloss.

3.  The power control method as recited in claim 2, wherein $P_0$ and alpha of D2D are configured separately for RRC_CONNECTED user equipment and RRC_IDLE user equipment.

4.  The power control method as recited in claim 2, wherein for RRC_CONNECTED user equipment, the $P_0$ and alpha

of D2D are configured by dedicated RRC signaling.

5. The power control method as recited in claim 2, wherein $P_0$ and alpha are configured differently among D2D user equipment groups in the same cell via system information block, SIB.

6. User equipment (102, 104, 500), comprising:

a computing unit (501) for computing a power value of device to device, D2D, transmission of a user equipment (102, 104, 500) performing D2D communication in an i-th subframe in a serving cell; and

an output unit (505) for transmitting a data signal at the computed power value to another user equipment (101, 103),

**characterized in that**

the power value of D2D transmission is computed using a Transmit Power Command, TPC, command transmitted by a D2D grant by copying a power control adjustment state $f_c(i - 1)$ of a PUSCH uplink channel of a wide area network, WAN, (i-1)-th subframe previous to the i-th subframe, and using one of a first set of parameters for D2D transmission mode 1 and a second set of parameters for D2D transmission mode 2, wherein the D2D transmission mode 1 is a transmission mode where a scheduling of the D2D communication is performed by a base station, and the D2D transmission mode 2 is another transmission mode where a scheduling of the D2D communication is performed by the user equipment (102, 104, 500); and

the first set of parameters and the second set of parameters are configured independently.

7. The user equipment (102, 104, 500) as recited in claim 6, wherein each of the first set of parameters and the second set of parameters includes $P_0$ and alpha of D2D configured by MAC layer signaling or RRC signaling, wherein $P_0$ is a parameter indicating a targeted receiving power and alpha is a compensation coefficient of a downlink pathloss.

8. The user equipment (102, 104, 500) as recited in claim 7, wherein $P_0$ and alpha of D2D are configured separately for RRC_CONNECTED user equipment and RRC_IDLE user equipment.

9. The user equipment (102, 104, 500) as recited in claim 7, wherein for RRC_CONNECTED user equipment, the $P_0$ and alpha of D2D are configured by dedicated RRC signaling.

10. The user equipment (102, 104, 500) as recited in claim 7, wherein $P_0$ and alpha are configured differently among D2D user equipment groups in the same cell via system information block, SIB.

**Patentansprüche**

1. Leistungssteuerungsverfahren, mit:

Berechnen eines Leistungswertes einer Gerät-zu-Gerät-, D2D-, Übertragung einer Benutzereinrichtung (102, 104, 500), die eine D2D-Kommunikation in einen i-ten Teilblock in einer kommunikationsbereitstellenden Zelle ausführt; und

Übertragen eines Datensignals entsprechend dem berechneten Leistungswert an eine weitere Benutzereinrichtung (101, 103),

**dadurch gekennzeichnet, dass**

der Leistungswert der D2D-Übertragung unter Anwendung eines Sendeleistungsbefehls-, TPC-, Befehls berechnet wird, der durch eine D2D-Zuteilung durch Kopieren eines Leistungssteuerungseinstellungszustands $f_c(i-1)$ eines PUSCH-Aufwärtsverbindungskanals in einem (i-1)-ten Teilblocks in einem Weitbereichsnetzwerk, WLAN, vor dem i-ten Teilblock übertragen wird, und durch Verwenden eines ersten Parametersatzes für einen D2D-Übertragungsmodus 1 oder eines zweiten Parametersatzes für einen D2D-Übertragungsmodus 2, wobei der D2D-Übertragungsmodus 1 ein Übertragungsmodus ist, in welchem eine Zeitplanung der D2D-Kommunikation durch eine Basisstation erfolgt, und der D2D-Übertragungsmodus 2 ein weiterer Übertragungsmodus ist, in welchem eine Zeitplanung der D2D-Kommunikation durch die Benutzereinrichtung erfolgt; und

der erste Parametersatz und der zweite Parametersatz unabhängig konfiguriert werden.

2. Leistungssteuerungsverfahren nach Anspruch 1, wobei der erste Parametersatz und der zweite Parametersatz jeweils $P_0$ und Alpha der D2D enthalten, die durch MAC-Schichtsignalisierung oder RRC-Signalisierung konfiguriert werden, wobei $P_0$ ein Parameter ist, der eine angestrebte Empfangsleistung angibt, und Alpha ein Kompensationskoeffizient für einen Abwärtsverbindungskanalverlust ist.

3. Leistungssteuerungsverfahren nach Anspruch 2, wobei $P_0$ und Alpha der D2D für eine RRC_CONNECTED-Benutzereinrichtung und eine RRC_IDLE-Benutzereinrichtung separat konfiguriert werden.

4. Leistungssteuerungsverfahren nach Anspruch 2, wobei für die RRC_CONNECTED-Benutzereinrichtung das $P_0$ und Alpha der D2D durch eine spezielle RRC-Signalisierung konfiguriert werden.

5. Leistungssteuerungsverfahren nach Anspruch 2, wobei $P_0$ und Alpha aus D2D-Benutzereinrichtungengruppen in der gleichen Zelle mittels eines Systeminformationsblocks, SIB, unterschiedlich konfiguriert werden.

6. Benutzereinrichtung (102, 104, 500), mit:

einer Recheneinheit (501) zur Berechnung eines Leistungswertes einer Gerät-zu-Gerät-, D2D-, Übertragung einer Benutzereinrichtung (102, 104, 500), die eine D2D-Kommunikation in einem i-ten Teilblock in einer kommunikationsbereitstellenden Zelle ausführt; und
einer Ausgabeeinheit (505) zur Übertragung eines Datensignals entsprechend dem berechneten Leistungswert an eine weitere Benutzereinrichtung (101, 103),
**dadurch gekennzeichnet, dass**
der Leistungswert der D2D-Übertragung unter Anwendung eines Sendeleistungsbefehls-, TPC-, Befehls berechnet wird, der durch eine D2D-Zuteilung durch Kopieren eines Leistungssteuerungseinstellungszustands $f_c(i-1)$ eines PUSCH-Aufwärtsverbindungskanals in einem (i-1)-ten Teilblocks in einem Weitbereichsnetzwerk, WLAN, vor dem i-ten Teilblock übertragen wird, und durch Verwenden eines ersten Parametersatzes für einen D2D-Übertragungsmodus 1 oder eines zweiten Parametersatzes für einen D2D-Übertragungsmodus 2, wobei der D2D-Übertragungsmodus 1 ein Übertragungsmodus ist, in welchem eine Zeitplanung der D2D-Kommunikation durch eine Basisstation erfolgt, und der D2D-Übertragungsmodus 2 ein weiterer Übertragungsmodus ist, in welchem eine Zeitplanung der D2D-Kommunikation durch die Benutzereinrichtung erfolgt; und
der erste Parametersatz und der zweite Parametersatz unabhängig konfiguriert sind.

7. Benutzereinrichtung (102, 104, 500) nach Anspruch 6, wobei der erste Parametersatz und der zweite Parametersatz jeweils $P_0$ und Alpha der D2D enthalten, die durch MAC-Schichtsignalisierung oder RRC-Signalisierung konfiguriert sind, wobei $P_0$ ein Parameter ist, der eine angestrebte Empfangsleistung angibt, und Alpha ein Kompensationskoeffizient für einen Abwärtsverbindungskanalverlust ist.

8. Benutzereinrichtung (102, 104, 500) nach Anspruch 7, wobei $P_0$ und Alpha der D2D für eine RRC_CONNECTED-Benutzereinrichtung und eine RRC_IDLE-Benutzereinrichtung separat konfiguriert sind.

9. Benutzereinrichtung (102, 104, 500) nach Anspruch 7, wobei für die RRC_CONNECTED-Benutzereinrichtung das $P_0$ und Alpha der D2D durch eine spezielle RRC-Signalisierung konfiguriert sind.

10. Benutzereinrichtung (102, 104, 500) nach Anspruch 7, wobei $P_0$ und Alpha aus D2D-Benutzereinrichtungengruppen in der gleichen Zelle mittels eines Systeminformationsblocks, SIB, unterschiedlich konfiguriert sind.

**Revendications**

1. Procédé de contrôle de puissance comprenant :

le calcul d'une valeur de puissance de transmission de dispositif à dispositif, D2D, d'un équipement utilisateur (102, 104, 500) en mettant en œuvre une communication D2D dans une i-ième sous-trame dans une cellule de desserte ; et
la transmission d'un signal de données avec la valeur de puissance calculée à un autre équipement utilisateur (101, 103),
**caractérisé en ce que**
la valeur de puissance de transmission D2D est calculée en utilisant une commande de transmission de puissance TPC, soit Transmit Power Command, transmise par une concession D2D en copiant un état d'ajustement de contrôle de puissance d'un canal de liaison montante PUSCH dans une (i-1)-ième sous-trame d'un réseau étendu WAN, soit Wide Area Network, précédant la i-ième sous-trame, et en utilisant un ensemble parmi un premier ensemble de paramètres pour un mode de transmission D2D 1 et un deuxième ensemble de paramètres pour un mode de transmission D2D 2, dans lequel le mode de transmission D2D 1 est un mode de transmission où une programmation de la communication D2D est mise en œuvre par une station de base, et le mode de transmission D2D 2 est un autre mode de transmission où une programmation de la communication D2D est mise en œuvre par l'équipement utilisateur ; et

le premier ensemble de paramètres et le deuxième ensemble de paramètres sont configurés indépendamment.

2. Procédé de contrôle de puissance selon la revendication 1, dans lequel chaque ensemble parmi le premier ensemble de paramètres et le deuxième ensemble de paramètres comprend $P_0$ et alpha de D2D configurés par une signalisation de couche MAC ou par une signalisation RRC, dans lequel $P_0$ est un paramètre indiquant une puissance de réception ciblée et alpha est un coefficient de compensation de perte de chemin de liaison descendante.

3. Procédé de contrôle de puissance selon la revendication 2, dans lequel $P_0$ et alpha de D2D sont configurés séparément pour un équipement utilisateur RRC_CONNECTED et un équipement utilisateur RRC_IDLE.

4. Procédé de contrôle de puissance selon la revendication 2, dans lequel, pour un équipement utilisateur RRC_CONNECTED, $P_0$ et alpha de D2D sont configurés par une signalisation RRC dédiée.

5. Procédé de contrôle de puissance selon la revendication 2, dans lequel $P_0$ et alpha sont configurés différemment parmi les groupes d'équipements utilisateur D2D dans la même cellule via un bloc d'information de système SIB, soit System Information Block.

6. Équipement utilisateur (102, 104, 500), comprenant :

une unité de calcul (501) pour calculer une valeur de puissance d'une transmission de dispositif à dispositif, D2D, d'un équipement utilisateur (102, 104, 500) mettant en œuvre une communication D2D dans une i-ième sous-trame dans une cellule de desserte ; et
une unité de sortie (505) pour transmettre un signal de données avec la valeur de puissance calculée à un autre équipement utilisateur (101, 103),
**caractérisé en ce que**
la valeur de puissance de transmission D2D est calculée en utilisant une commande de transmission de puissance TPC transmise par une concession D2D en copiant un état d'ajustement de contrôle de puissance d'un canal de liaison montante PUSCH d'une (i-1)-ième sous-trame de réseau étendu WAN précédant la i-ième sous-trame, et en utilisant un ensemble parmi un premier ensemble de paramètres pour un mode de transmission D2D 1 et un deuxième ensemble de paramètres pour un mode de transmission D2D 2, dans lequel le mode de transmission D2D 1 est un mode de transmission où une programmation de la communication D2D est mise en œuvre par une station de base, et le mode de transmission D2D 2 est un autre mode de transmission où une programmation de la communication D2D est mise en œuvre par l'équipement utilisateur (102, 104, 500) ; et
le premier ensemble de paramètres et le deuxième ensemble de paramètres sont configurés indépendamment.

7. Équipement utilisateur (102, 104, 500) selon la revendication 6, dans lequel chaque ensemble parmi le premier ensemble de paramètres et le deuxième ensemble de paramètres comprend $P_0$ et alpha de D2D configurés par une signalisation de couche MAC ou par une signalisation RRC, dans lequel $P_0$ est un paramètre indiquant une puissance de réception ciblée et alpha est un coefficient de compensation d'une perte de chemin de liaison descendante.

8. Équipement utilisateur (102, 104, 500) selon la revendication 7, dans lequel $P_0$ et alpha de D2D sont configurés séparément pour un équipement utilisateur RRC_CONNECTED et un équipement utilisateur RRC_IDLE.

9. Équipement utilisateur (102, 104, 500) selon la revendication 7, dans lequel, pour un équipement utilisateur RRC_CONNECTED, $P_0$ et alpha de D2D sont configurés par une signalisation RRC dédiée.

10. Équipement utilisateur (102, 104, 500) selon la revendication 7, dans lequel $P_0$ et alpha sont configurés différemment parmi les groupes d'équipements utilisateur D2D dans la même cellule via un bloc d'information de système SIB.

Figure 1

computing a power value of D2D transmission of a user equipment performing D2D communication in a subframe in a serving cell, based on power control adjustment state of LTE WAN uplink channel of the user equipment and a offset or ratio indicated by a TPC command indicated in D2D grant or DCI format 3/3A

S201

Figure 2

Time domain

Subframe 1   Subframe 2   Subframe 3   Subframe 4   Subframe 5

······   | WAN | D2D | WAN | WAN | D2D |   ······

fc(i-1)

eNB indicates $\delta_{D2D,c}$ (i-K$_{D2D}$)
for D2D user

fc(i-1) + $\delta_{D2D,c}$ (i-K$_{D2D}$)

Figure 3

400

eNB

$2^{nd}$ set of {P$_0$, alpha} for
D2D group2

$1^{st}$ set of {P$_0$, alpha} for
D2D group1

Figure 4

500

| computing unit 501 |
|---|

| CPU 502 |
|---|

| ROM 503 |
|---|

| RAM 504 |
|---|

| I/O 505 |
|---|

| I/F 506 |
|---|

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011275382 A1

### Non-patent literature cited in the description

- **NSN ; NOKIA.** WAN protection by configurable D2D transmission power control. *3GPP Draft, R1-142454, 3GPP TSG-RAN WG1 Meeting #77,* 18 May 2014